# FASCICULE DE BREVET EUROPEEN

(11) **EP 0 423 013 B1**
(45) Date de publication et mention de la délivrance du brevet: **01.02.1995**
(21) Numéro de dépôt: 90402792.7
(22) Date de dépôt: 08.10.1990
(51) Int. Cl.: B62D 55/075

(54) **Système de commande d'un bras mobile dépendant d'un véhicule et utilisé pour le franchissement de crêtes**
System zur Steuerung eines beweglichen Armes, verbunden mit einem Fahrzeug zur Überwindung von Graten
System for controlling a movable lever arm articulated to a vehicle for crossing ridges

(30) Priorité: 09.10.1989 FR 8913156
(43) Date de publication de la demande: 17.04.1991
(73) Titulaire: PROTEE Groupement d'Intérêt Economique, 75005 Paris (FR)
(72) Inventeur: Favre, Serge, F-40400 Tartas (FR); Bersegol, Jean Pierre, F-95270 Luzarches (FR)
(74) Mandataire: Dubois-Chabert, Guy

(56) Documents cités:
- WO-A-87/02634
- FR-A- 2 610 885
- PATENT ABSTRACTS OF JAPAN, vol. 8, no. 112 (M-298)[1549], 25 mai 1984;& JP-A-59 20 777 (FURUKAWA KOGYO K.K.) 02-02-1984

## Description

L'invention se rapporte à un système de commande de déploiement d'un bras mobile dépendant d'un véhicule et utilisé pour le franchissement de crêtes et a notamment été prévue pour être utilisée sur le véhicule décrit dans le brevet français FR-A-2 610 885.

Ce brevet décrit un véhicule à chenilles déplaçable sur des sols en pentes variables ; les crêtes es sont définies comme des raccordements de pentes différentes délimitant des saillies. Dans l'application plus précisément envisagée, le véhicule se déplace sur des paliers et des escaliers, et les crêtes sont alors les raccordements d'un escalier et d'un palier supérieur.

Quand le véhicule commence à surplomber le palier après avoir gravi l'escalier et se trouve sur le point de basculer, on déploie le bras à l'avant du véhicule jusqu'à lui faire toucher le sol à une extrémité et on le ramène petit à petit en position rétractée au cours de l'avance subséquente du véhicule pour que ce dernier ne retombe que progressivement en position horizontale. Le bras est également déployé quand le véhicule est sur le point d'arriver sur un escalier descendant : le véhicule est porté à une inclinaison égale ou en pratique un peu supérieure à celle de l'escalier. On évite ainsi tout basculement brusque et, quand le centre de gravité du véhicule surplombe l'escalier, le bras peut être replié.

La principale critique que l'on puisse adresser à un tel système est son manque de précision. En effet, lors de la montée d'un escalier, on commande un déploiement total du bras sans pouvoir connaître avec précision l'instant approprié. Il s'ensuit soit que le véhicule est soulevé de l'escalier et incliné excessivement lorsque le déploiement est prématuré, ce qui compromet sa stabilité, soit que le bras n'atteint pas le palier dans le cas contraire, et un basculement brusque du véhicule ne peut être empêché.

On n'est en outre pas maître de la vitesse de retraction du bras qui est ensuite provoquée.

Le véhicule est également incliné excessivement quand il aborde un escalier descendant, et aucun moyen de réglage du déploiement du bras n'est indiqué dans ce brevet antérieur.

On remarquera enfin que, comme le bras est commandé par un système qui n'autorise qu'un état déployé stable, l'utilisation du véhicule est limitée à des trajets ne comportant que des variations de pente de même angle.

L'invention décrite ci-après vise à résoudre ces problèmes et avant tout à rendre le franchissement de crêtes et la remise à l'horizontale plus doux en empêchant les déploiements excessifs du bras. Certaines variantes de l'invention permettent de plus de ne pas rétracter le bras trop vite ou de limiter l'inclinaison du véhicule au cours de la descente. L'invention est enfin utilisable sur des trajets comprenant par exemple des pentes ou des escaliers d'inclinaisons différentes.

L'invention est ainsi greffée sur un système de commande de déploiement d'un bras mobile déplacé entre une position rétractée et une position totalement déployée par des mouvements en sens opposés, le bras étant dépendant d'un véhicule évoluant sur un sol comportant des pentes variables séparées par des crêtes, la position rétractée correspondant à un état où le bras est soulevé du sol et la position totalement déployée à un état où une extrémité inférieure du bras est dirigée vers le sol, comprenant un vérin composé d'un cylindre rempli de liquide, d'un piston coulissant dans le cylindre et le séparant en deux chambres étanches, d'une tige reliée au piston et au bras, une source de liquide sous pression et un réservoir de liquide, deux conduites aboutissant chacune à une chambre respective, un distributeur à trois états apte à bloquer les deux conduites et à raccorder chacune d'elles à la source de liquide sous pression, l'autre conduite étant alors raccordée au réservoir de liquide. Elle consiste à adjoindre à ce système des moyens pour arrêter le déploiement du bras en deçà de la position totalement déployée quand son extrémité libre arrive au sol. Ces moyens consistent en une dérivation reliant une première chambre, dont le volume s'accroît quand le bras est déplacé vers la position déployée, au réservoir de liquide par l'intermédiaire d'un limiteur d'écoulement, une seconde dérivation reliant la seconde chambre au réservoir de liquide, et un système de distribution pour ouvrir et obturer les deux dérivations.

La seconde dérivation est avantageusement munie d'un limiteur de débit. Le système peut également comporter un détecteur d'inclinaison fixé sur le véhicule et des moyens logiques comparant l'inclinaison du véhicule mesurée par le détecteur et une inclinaison de référence et ordonnant des déplacements partiels du bras en direction de sa position rétractée quand l'inclinaison du véhicule excède l'inclinaison de référence.

Une réalisation plus simple selon la revendication indépendante 7 utilise un capteur de contact du sol qui comprend une partie reliée au bras de manière mobile et aboutissant au-dessous de l'extrémité libre du bras, ainsi qu'un interrupteur commuté lorsque la partie mobile est déplacée par contact du sol.

On va maintenant décrire plus en détail l'invention à l'aide des quatre figures suivantes annexées à titre illustratif et non limitatif :
- La figure 1 est une vue générale d'une première réalisation de l'invention ;
- La figure 2 montre une réalisation équivalente à celle de la figure 1 ;
- La figure 3 montre un système utilisé pour commander le fonctionnement du bras au cours d'une descente ; et
- La figure 4 illustre une autre réalisation.

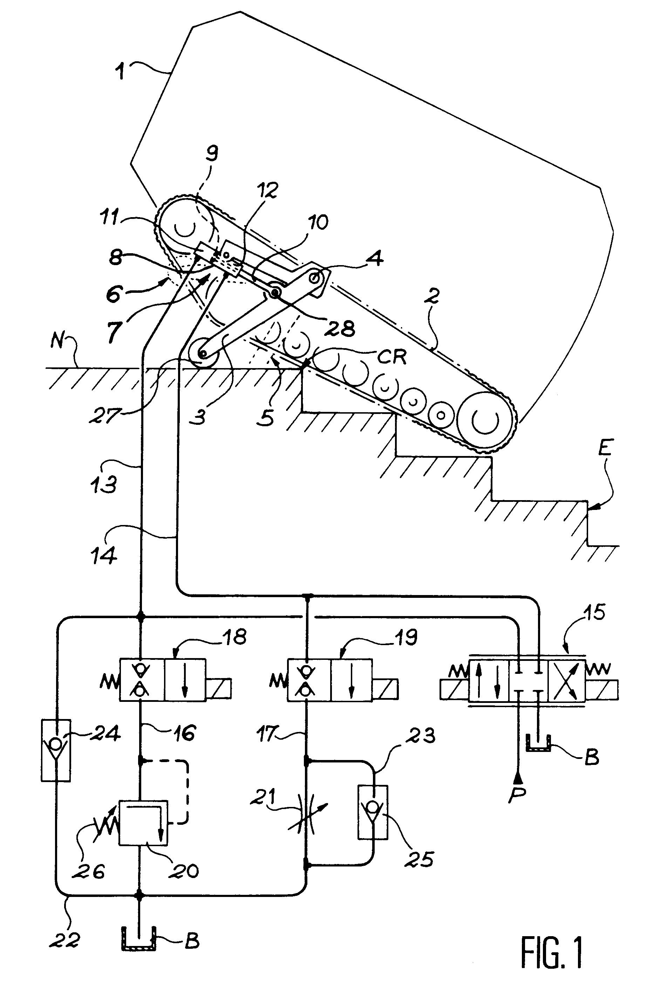

Le véhicule, référencé par 1 sur la figure 1, est composé en particulier de deux chenilles 2 et d'un bras 3 pivotant autour d'une articulation 4 fixée sur le véhicule 1 entre une position déployée indiquée par la ligne 5 et une position rétractée indiquée par la ligne 6. Le pivotement du bras 3 est commandé par un vérin 7 constitué classiquement d'un cylindre 8 dans lequel coulisse un piston 9, auquel est liée une tige 10 qui traverse le cylindre 8 et aboutit par une articulation 28 à mi-longueur du bras 3. L'intérieur du cylindre 8 est divisé de manière étanche en une première chambre 11 ou chambre de fond, dont le volume s'accroït quand le bras 3 est déplacé vers sa position déployée, et une seconde chambre 12 par le piston 9. Une première conduite 13 et une seconde conduite 14 relient respectivement les première et seconde chambres 11 et 12 à un distributeur progressif 15 commandé électromagnétiquement, muni de ressorts de rappel et pouvant prendre trois états fondamentaux.

Le distributeur progressif 15 est également relié à une source d'huile sous pression P et à une bache à huile B. Quand il n'est pas commandé, il est fermé et obture les première et seconde conduites 13 et 14 ; quand il est commandé, il peut prendre deux états ouverts où il relie l'une ou l'autre des conduites 13 et 14 à la source d'huile sous pression P et l'autre conduite à la bâche B, créant ainsi dans les chambres 11 et 12 une différence de pression qui déplace le piston 9 et le bras 3 à une vitesse qui dépend de l'intensité du courant qui traverse les moyens électromagnétiques de commande du distributeur progressif 15 et l'ouvre donc plus ou moins.

Deux dérivations 16 et 17 relient respectivement les deux chambres 11 et 12 ou, comme représenté ici, leurs conduites associées 13 et 14 à la bache B. Un système de distribution permet d'obturer ou d'ouvrir simultanément les deux dérivations 16 et 17. Dans le cas présent, on emploie deux distributeurs identiques 18 et 19 à commande électromagnétique et rappel par ressorts. A l'état non excité, les dérivations 16 et 17 sont obturées.

La première dérivation 16 est munie d'un limiteur de pression 20 qui n'autorise l'écoulement d'huile de la première chambre 11 vers la bache B qu'au-dessus d'une pression déterminée qui peut d'ailleurs être réglée par l'utilisateur en modifiant le tarage du ressort de rappel 26 du limiteur de pression 20. La seconde dérivation 17 est munie d'un limiteur de débit 21. Des bipasses 22 et 23 contournent respectivement le limiteur de pression 20 et le distributeur 18 d'une part, le limiteur de débit 21 d'autre part ; chacun des bipasses 22 et 23 est muni d'un clapet anti-retour 24 et 25 qui n'y autorise l'écoulement qu'à partir de la bache B vers la chambre associée 11 ou 12.

Quand le véhicule finit de gravir un escalier E et commence à franchir la crête CR qui correspond en fait au nez de la marche la plus élevée pour surplomber un palier N, le bras 3, qui avait précédemment été ramené en position rétractée 6, est déployé. On excite pour cela les deux distributeurs 18 et 19 tout en maintenant le distributeur progressif 15 à l'état non excité. Le bras 3 tombe sous l'effet de la gravité, l'huile s'écoulant de la bâche B vers la première chambre 11 par le premier bipasse 22 et de la seconde chambre 12 vers la bâche B par la seconde dérivation 17. Ce second écoulement est toutefois freiné par le limiteur de débit 21, si bien que la descente du bras 3 se poursuit à vitesse modérée jusqu'à ce qu'une roue folle 27 à l'extrémité libre du bras 3 atteigne le palier N et que le centre de gravité du véhicule 1 arrive à l'aplomb de la crête CR. Le véhicule 1 commence alors à retomber et le bras 3 revient vers la position rétractée 6, mais ce mouvement est lui aussi progressif car l'écoulement de la première chambre 11 vers la bâche B qui s'instaure alors est freiné par le limiteur de pression 20. Il est avantageux de régler le limiteur de pression 20 de sorte qu'il n'autorise des écoulements qu'à une pression légèrement inférieure à la pression exercée par le piston 9 dans la première chambre 11 par le poids du véhicule 1 supporté par le bras 3. On est alors en régime quasi statique.

Le mouvement du bras 3 s'arrête quand le véhicule 1 est redevenu horizontal et ne porte plus que sur ses chenilles 2. L'excitation des distributeurs 18 et 19 cesse et le distributeur progressif 15 est excité pour ramener le bras 3 en position rétractée 6.

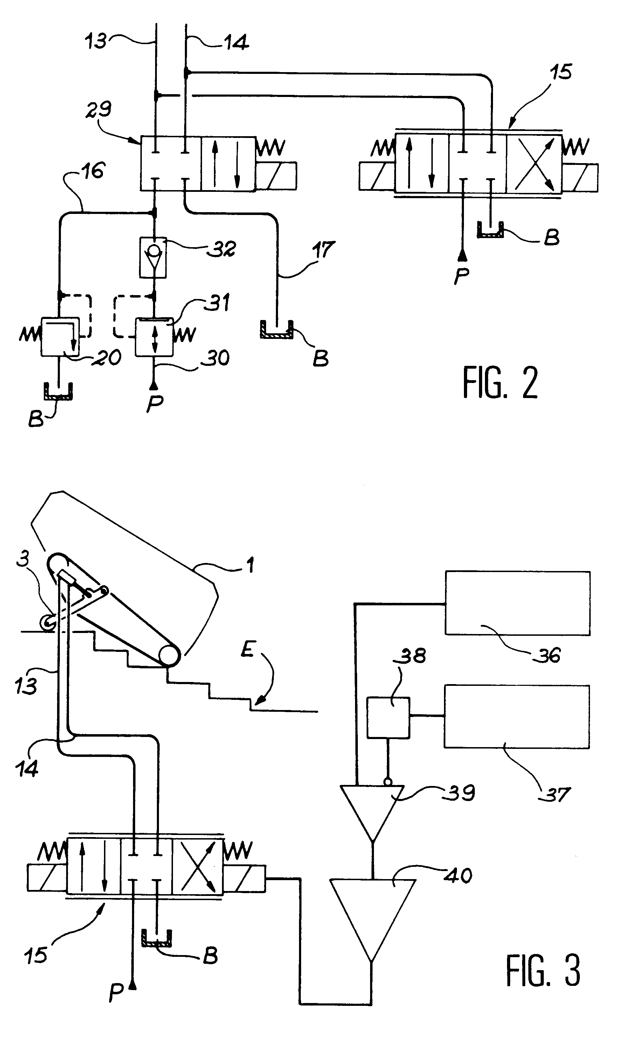

Suivant une conception légèrement différente représentée figure 2, les bipasses 22 et 23 sont supprimés de même que le limiteur de débit 21. Les distributeurs 18 et 19 sont par ailleurs remplacés par un distributeur unique à deux voies 29 à commande électromagnétique et moyens de rappel qui, ici encore, ouvre les dérivations 16 et 17 à l'état excité et les ferme le reste du temps.

Une sous-dérivation 30 relie la source d'huile sous pression P à un point de la première dérivation 16 situé entre le distributeur à deux voies 29 et le limiteur de pression 20. La sous-dérivation 30 est munie d'un réducteur de pression 31 et d'un clapet unidirectionnel 32 qui n'autorise l'écoulement que vers la première chambre 11.

L'utilisation d'un distributeur à deux voies 29 amène une simplification du dispositif. La sous-dérivation 30 permet par ailleurs d'introduire plus rapidement de l'huile dans la première chambre 11 et donc d'accélérer le déploiement du bras 3 sans toutefois le rendre trop brusque. Le clapet 32 empêche les retours d'huile vers le réducteur de pression 31 quand le véhicule 1 retombe.

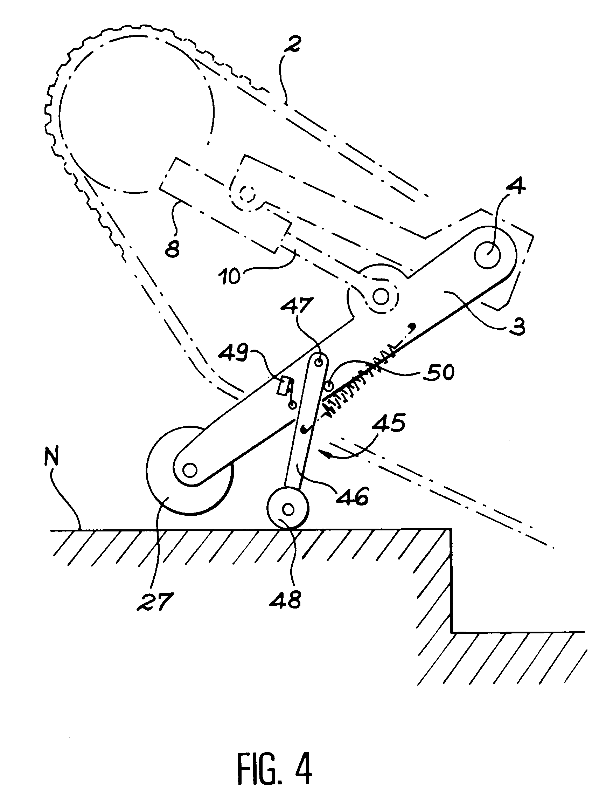

Sur un palier N, le bras 3 donne au véhicule une inclinaison qui est de 17° dans la réalisation construite quand il est dans la position déployée 5 et les escaliers E qu'il faut descendre ont une pente moyenne de 27°. Comme le représente la figure 3, quand le véhicule s'apprête à descendre un escalier E, il ne porte cependant sur celui-ci que par sa partie éloignée du bras 3 (encore en appui sur le palier N) et prend donc une inclinaison supérieure à la pente de l'escalier E, ce qui met en danger sa stabilité. C'est pourquoi le véhicule 1 porte un système qui comprend un détecteur d'inclinaison ou inclinomètre 36 et un générateur d'inclinaison de référence 37. L'inclinomètre 36 fournit une tension proportionnelle à l'inclinaison du véhicule 1 et le générateur d'inclinaison de référence 37 une autre tension proportionnelle à la valeur de référence par un convertisseur 38. Un comparateur 39 permet de soustraire ces deux tensions et d'agir sur le distributeur progressif 15 via un amplificateur 40.

Quand le véhicule 1 aborde donc un escalier E descendant, la valeur de l'inclinaison de référence est établie à une valeur légèrement supérieure à la pente moyenne de l'escalier (28° dans le cas présent) et, dès que l'inclinomètre 36 relève une valeur égale ou supérieure, le distributeur progressif 15 est excité de manière à faire pénétrer de l'huile dans la seconde chambre 12 pour rétracter légèrement le bras 3.

On rétracte ainsi progressivement le bras 3 jusqu'à ce que l'inclinomètre 36 relève une inclinaison au plus égale à 28°. La rétraction du bras 3 est reprise dès que l'inclinomètre 36 marque de nouveau une indication excédant cette valeur. Quand l'inclinaison du véhicule 1 reste stationnaire à 27°, ses chenilles 2 reposent sur l'escalier E sur toute leur longueur et le bras 3 peut être entièrement rétracté.

Pendant ce processus, les autres distributeurs 18, 19 et 29 ne sont pas excités.

Le générateur d'inclinaison de référence 37, de même que les distributeurs 18, 19 et 29, peut être commandé par le conducteur ou par des capteurs de variation de pente du sol tels que ceux mentionnés dans le brevet antérieur précité.

Une réalisation simplifiée de l'invention est représentée sur la figure 4. Elle permet de se passer du système hydraulique décrit précédemment et en particulier des électrovannes 18 et 19 et des limiteurs 20 et 21. On utilise ici un capteur de contact du sol 45 constitué d'une bielle 46 articulée par une extrémité 47 au bras 3, près de la roue folle 27. L'autre extrémité de la bielle 46 porte une roulette 48 qui dépasse de la roue folle 27 par le bas quand le bras 3 est soulevé du sol. Mais quand le bras 3 est déployé et sur le point d'atteindre le palier N, le contact de la roulette 48 fait tourner la bielle 46 qui vient alors toucher un interrupteur 49. Dans cette réalisation, les mouvements du bras 3 peuvent dépendre uniquement du distributeur progressif 15 qui est alors asservi à l'interrupteur 49 ou commandé par le conducteur, s'il y en a un, à l'aide des indications de l'interrupteur 49 affichées sur le tableau de bord. Quand le contact de la roulette 48 sur le palier N est repéré, le distributeur progressif 15 est commandé pour que le débit qui le traverse soit réduit ou supprimé. On évite ainsi des déploiements excessifs du bras 3.

Par ailleurs, des rétractions lentes du bras 3 restent possibles si on prend soin de n'exciter ensuite que légèrement le distributeur 15.

Un taquet 50 saillant du bras 3 sert de butée en rotation à la bielle 46 et l'empêche de pendre verticalement.

Cette réalisation de l'invention peut être cumulée avec la précédente sur un même véhicule.

## Revendications

1. Système de commande de déploiement d'un bras mobile (3) déplacé entre une position rétractée (6) et une position totalement déployée (5) par des mouvements en sens opposés, le bras (3) étant dépendant d'un véhicule (1) évoluant sur un sol comportant des pentes variables (E, N) séparées par des crêtes (CR), la position rétractée (6) correspondant à un état où le bras (3) est soulevé du sol et la position totalement déployée (5) à un état où une extrémité libre (27) du bras (3) est dirigée vers le sol, comprenant un vérin (7) composé d'un cylindre (8) rempli de liquide, d'un piston coulissant (9) dans le cylindre (8) et le séparant en deux chambres étanches (11, 12), d'une tige (10) reliée au piston (9) et au bras (3), une source de liquide sous pression (P) et un réservoir de liquide (B), deux conduites (13, 14) aboutissant chacune à une chambre respective (11, 12), un distributeur (15) à trois états apte à bloquer les deux conduites (13, 14) et à raccorder chacune d'elles à la source de liquide sous pression (P), l'autre conduite étant alors raccordée au réservoir de liquide (B), caractérisé en ce qu'il comprend des moyens pour arrêter le déploiement du bras (3) en deçà de la position totalement déployée quand son extrémité libre (27) arrive au sol et qui consistent en une dérivation (16) reliant une première chambre (11), dont le volume s'accroît quand le bras (3) est déplacé vers la position totalement déployée (5), au réservoir de liquide (B) par l'intermédiaire d'un limiteur d'écoulement (20), une seconde dérivation (17) reliant la seconde chambre (12) au réservoir de liquide (B), et un système de distribution (18, 19, 29) pour ouvrir et obturer les deux dérivations.

2. Système de commande de déploiement d'un bras mobile suivant la revendication 1, caractérisé en ce que le limiteur d'écoulement (20) est un limiteur de pression qui n'autorise des écoulements de la première chambre (11) vers le réservoir de liquide (B) qu'audessus d'une pression déterminée dans la première dérivation (16).

3. Système de commande de déploiement d'un bras mobile suivant l'une quelconque des revendications 1 ou 2, caractérisé en ce que la seconde dérivation (17) est munie d'un limiteur de débit (21).

4. Système de commande de déploiement d'un bras mobile suivant la revendication 3, caractérisé en ce que la première dérivation (16) est munie d'un bipasse (22) contournant le limiteur d'écoulement (20) et portant un clapet (24) autorisant l'écoulement du liquide uniquement vers la première chambre (11).

5. Système de commande de déploiement d'un bras mobile suivant l'une quelconque des revendications 3 ou 4, caractérisé en ce que la seconde dérivation (17) est munie d'un bipasse (23) contournant le limiteur de débit (21) et portant un clapet (25) autorisant l'écoulement du liquide uniquement vers la seconde chambre (12).

6. Système de commande de déploiement d'un bras mobile suivant l'une quelconque des revendications 1 ou 2, caractérisé en ce qu'il comprend une sousdérivation (30) reliant la source de liquide sous pression (P) à un endroit de la première dérivation entre le limiteur d'écoulement (20) et le système de distribution (29) et comportant un limiteur de pression (31) du liquide de la source.

7. Système de commande de déploiement d'un bras mobile (3) déplacé entre une position rétractée (6) et une position totalement déployée (5) par des mouvements en sens opposés, le bras (3) étant dépendant d'un véhicule (1) évoluant sur un sol comportant des pentes variables (E, N) séparées par des crêtes (CR), la position rétractée (6) correspondant à un état où le bras (3) est soulevé du sol et la position totalement déployée (5) à un état où une extrémité libre (27) du bras (3) est dirigée vers le sol, comprenant un vérin (7) composé d'un cylindre (8) rempli de liquide, d'un piston coulissant (9) dans le cylindre (8) et le séparant en deux chambres étanches (11, 12), d'une tige (10) reliée au piston (9) et au bras (3), une source de liquide sous pression (P) et un réservoir de liquide (B), deux conduites (13, 14) aboutissant chacune à une chambre respective (11, 12), un distributeur (15) à trois états apte à bloquer les deux conduites (13, 14) et à raccorder chacune d'elles à la source de liquide sous pression (P), l'autre conduite étant alors raccordée au réservoir de liquide (B), caractérisé en ce qu'il comprend des moyens pour arrêter le déploiement du bras (3) en deçà de la position totalement déployée quand son extrémité libre (27) arrive au sol et qui incluent un capteur de contact (45) du sol qui comprend une partie reliée au bras (3) de manière mobile et aboutissant au-dessous de l'extrémité libre (27) du bras (3), ainsi qu'un interrupteur (49) commuté lorsque la partie mobile (46) est déplacée par contact du sol.

8. Système de commande de déploiement d'un bras mobile suivant la revendication 7, caractérisé en ce que la partie mobile est une bielle (46) articulée au bras à une extrémité et portant une roulette (48) à l'autre extrémité.

9. Système de commande de déploiement d'un bras mobile suivant l'une quelconque des revendications 1 à 8, comprenant un détecteur d'inclinaison (36) fixé sur le véhicule, caractérisé en ce qu'il comprend des moyens logiques (37 à 40) comparant l'inclinaison du véhicule mesurée par le détecteur (36) et une inclinaison de référence et ordonnant des déplacements partiels du bras (3) en direction de sa position rétractée (6) quand l'inclinaison du véhicule excède l'inclinaison de référence.

## Claims

1. A system for controlling the deployment of a movable arm (3) displaced between a retracted position (6) and a totally deployed position (5) by movements in opposite directions, the arm (3) being dependent upon a vehicle (1) moving on ground comprising variable slopes (E, N), separated by peaks (CR), the retracted position (6) corresponding to a state in which the arm (3) is raised from the ground and the totally deployed position (5) to a state in which a free end (27) of the arm (3) is directed towards the ground, comprising a jack (7) comprised of a cylinder (8) filled with liquid, of a piston (9) sliding in the cylinder (8) and separating it into two sealed chambers (11, 12), of a rod (10) connected to the piston (9) and to the arm (3), a source of pressurised liquid (P) and a reservoir of liquid (B), two ducts (13, 14) each ending at a respective chamber (11, 12), a distributor (15) with three states able to block the two ducts (13, 14) and to connect each of them to the pressurised liquid source (P), the other conduit being thus connected to the reservoir of liquid (B), characterised in that it comprises means for stopping the deployment of the arm (3) short of the totally deployed position when its free end (27) arrives on the ground, and which consist of a drain (16) connecting a first chamber (11), of which the volume increases when the arm (3) is displaced towards the totally deployed position (5), to the reservoir of liquid (B) by means of a flow limiter (20), a second drain (17) connecting the second chamber (12) to the reservoir of liquid (B), and a distribution system (18, 19, 29) to open and close the two drains.

2. A system for controlling the deployment of a movable arm according to claim 1, characterised in that the flow limiter (20) is a pressure limiter, which permits a flow from the first chamber (11) towards the reservoir of liquid (B) only above a predetermined pressure in the first drain (16).

3. A system for controlling the deployment of a movable arm according to either of claims 1 or 2, characterised in that the second drain (17) is provided with an output limiter (21).

4. A system for controlling the deployment of a movable arm according to claim 3 characterised in that the first drain (16) is provided with a bypass (22), bypassing the flow limiter (20) and having a valve (24) permitting the flow of liquid only towards the first chamber (11).

5. A system for controlling the deployment of a movable arm according to either of claims 3 or 4 characterised in that the second drain (17) is provided with a bypass (23), bypassing the output limiter (21) and having a valve (25) permitting the flow of the liquid only towards the second chamber (12).

6. A system for controlling the deployment of a movable arm according to either of claims 1 or 2 characterised in that it comprises a sub-drain (30) connecting the source of pressurised liquid (P) to a point in the first drain between the flow limiter (20) and the distribution system (29) and comprising a pressure limiter (31) for the liquid from the source.

7. A system for controlling the deployment of a movable arm (3) displaced between a retracted position (6) and a totally deployed position (5) by movements in opposite directions, the arm (3) being dependent upon a vehicle (1) moving on ground comprising variable slopes (E, N), separated by peaks (CR), the retracted position (6) corresponding to a state in which the arm (3) is raised from the ground and the totally deployed position (5) to a state in which a free end (27) of the arm (3) is directed towards the ground, comprising a jack (7) comprised of a cylinder (8) filled with liquid, of a piston (9) sliding in the cylinder (8) and separating it into two sealed chambers (11, 12), of a rod (10) connected to the piston (9) and to the arm (3), a source of pressurised liquid (P) and a reservoir of liquid (B), two ducts (13, 14) each ending at a respective chamber (11, 12), a distributor (15) with three states able to block the two ducts (13, 14) and to connect each of them to the pressurised liquid source (P), the other conduit being thus connected to the reservoir of liquid (B), characterised in that it comprises means for stopping the deployment of the arm (3) short of the totally deployed position when its free end (27) arrives on the ground, and which include a sensor (45) for sensing contact with the ground, which comprises a part connected to the arm (3) in a movable manner and ending below the free end (27) of the arm (3), as well as a circuit breaker (49) switched when the movable part (46) is displaced by contact with the ground.

8. A system for controlling the deployment of a movable arm according to claim 7 characterised in that the movable part is a connecting rod (46) articulated at the arm at one end and having a small wheel (48) at the other end.

9. A system for controlling the deployment of a movable arm according to any of claims 1 to 8 comprising an inclination detector (36) fixed to the vehicle, characterised in that it comprises logic means (37 to 40) comparing the inclination of the vehicle measured by the detector (36) with a reference inclination and controlling partial displacements of the arm (3) towards its retracted position (6) when the inclination of the vehicle exceeds the reference inclination.

## Patentansprüche

1. Steuersystem zum Ausfahren eines beweglichen Arms (3), bewegt zwischen einer eingezogenen Stellung (6) und einer ganz aufgefahrenen Stellung (5) durch Bewegungen mit entgegengesetzter Richtung, wobei der Arm (3) zu einem Fahrzeug (1) gehört, das sich auf einem Boden bewegt, der veränderliche Neigungen aufweist (E, N), getrennt durch Grate (CR), wobei die eingezogene Stellung (6) einem Zustand entspricht, in dem der Arm (3) abgehoben ist vom Boden und die ganz ausgefahrene Stellung (5) einem Zustand, in dem ein freies Ende (27) des Arms (3) gegen den Boden ausgerichtet ist, versehen mit einen Stellantrieb (7), umfassend einen mit Flüssigkeit gefüllten Zylinder (8), einen in dem Zylinder (8) gleitenden Kolben (9), der ihn in zwei dichte Kammern (11, 12) teilt, eine Stange (10), verbunden mit dem Kolben (9) und dem Arm (3), eine Druckflüssigkeitsquelle (P) und einen Flüssigkeitsspeicher (B), zwei Leitungen (13, 14), jede in jeweils einer Kammer (11, 12) mündend, einen Verteiler (15) mit drei Zuständen, fähig die beiden Leitungen (13, 14) zu blockieren und jede von ihnen mit der Druckflüssigkeitsquelle (P) zu verbinden, wobei die andere Leitung dann verbunden ist mit dem Flüssigkeitsspeicher (B),
**dadurch gekennzeichnet,** daß es Einrichtungen umfaßt, um das Ausfahren des Arms (3) anzuhalten vor dem Erreichen der ganz ausgefahrenen Stellung, wenn sein freies Ende (27) den Boden erreicht, die gebildet werden durch eine Abzweigleitung (16), die eine erste Kammer (11), deren Volumen zunimmt, wenn der Arm (3) sich in die ganz ausgefahrene Stellung (5) bewegt, verbindet mit dem Flüssigkeitsspeicher (B) über einen Durchflußbegrenzer (20), eine zweite Abzweigleitung (17), die die zweite Kammer (12) mit dem Flüssigkeitspeicher (B) verbindet, und ein Verteilsystem (18, 19, 29), um die beiden Abzweigleitungen zu öffnen und zu schließen.

2. Steuersystem zum Ausfahren eines beweglichen Arms nach Anspruch 1, dadurch gekennzeichnet, daß der Durchflußbegrenzer (20) ein Druckbegrenzungsventil ist, das Durchflüsse aus der ersten Kammer (11) in Richtung des Flüssigkeitsspeichers (B) nur über einem bestimmten Druck in der ersten Abzweigleitung (16) zuläßt.

3. Steuersystem zum Ausfahren eines beweglichen Arms nach einem der Ansprüche 1 oder 2, dadurch gekennzeichnet, daß die zweite Abzweigleitung (17) versehen ist mit einem Druchflußmengenbegrenzer (21).

4. Steuersystem zum Ausfahren eines beweglichen Arms nach Anspruch 3, dadurch gekennzeichnet, daß die erste Anzweigleitung (16) mit einem Bypass (22) versehen ist, der den Durchflußbegrenzer (20) umgeht und ein Rückschlagventil (24) enthält, das den Durchfluß der Flüssigkeit nur zuläßt zur ersten Kammer (11).

5. Steuersystem zum Ausfahren eines beweglichen Arms nach einem der Ansprüche 3 oder 4, dadurch gekennzeichnet, daß die zweite Anzweigleitung (17) mit einem Bypass (23) versehen ist, der den Durchflußbegrenzer (21) umgeht und ein Rückschlagventil (25) enthält, das den Durchfluß der Flüssigkeit nur zuläßt zur zweiten Kammer (12).

6. Steuersystem zum Ausfahren eines beweglichen Arms nach einem der Ansprüche 1 oder 2, dadurch gekennzeichnet, daß es eine Unterabzweigung (30) umfaßt, die die Druckflüssigkeitsquelle (P) verbindet mit einer Stelle der ersten Abzweigung zwischen dem Durchflußbegrenzer (20) und dem Verteilsystem (29) und einen Druckbegrenzer (31) der Flüssigkeit der Quelle enthält.

7. Steuersystem zum Ausfahren eines beweglichen Arms (3), bewegt zwischen einer eingezogenen Stellung (6) und einer ganz aufgefahrenen Stellung (5) durch Bewegungen mit entgegengesetzter Richtung, wobei der Arm (3) zu einem Fahrzeug (1) gehört, das sich auf einem Boden bewegt, der veränderliche Neigungen aufweist (E, N), getrennt durch Grate (CR), wobei die eingezogene Stellung (6) einem Zustand entspricht, in dem der Arm (3) abgehoben ist vom Boden und die ganz ausgefahrene Stellung (5) einem Zustand, in dem ein freies Ende (27) des Arms (3) gegen den Boden ausgerichtet ist, versehen mit einen Stellantrieb (7), umfassend einen mit Flüssigkeit gefüllten Zylinder (8), einen in dem Zylinder (8) gleitenden Kolben (9), der ihn in zwei dichte Kammern (11, 12) teilt, eine Stange (10), verbunden mit dem Kolben (9) und dem Am (3), eine Druckflüssigkeitsquelle (P) und einen Flüssigkeitsspeicher (B), zwei Leitungen (13, 14), jede in jeweils einer Kammer (11, 12) mündend, einen Verteiler (15) mit drei Zuständen, fähig die beiden Leitungen (13, 14) zu blockieren und jede von ihnen mit der Druckflüssigkeitsquelle (P) zu verbinden, wobei die andere Leitung dann verbunden ist mit dem Flüssigkeitsspeicher (B),
**dadurch gekennzeichnet,** daß es Einrichtungen umfaßt, um das Ausfahren des Arms (3) anzuhalten vor dem Erreichen der ganz aufgefahrenen Stellung, wenn sein freies Ende (27) den Boden erreicht, die einen Bodenkontaktfühler (45) einschließen, der einen Teil umfaßt, der auf bewegliche Weise mit dem Arm (3) verbunden ist und unter dem freien Ende (27) des Arms (3) endet, sowie einen Schalter (49), der umschaltet, wenn der bewegliche Teil (46) durch Bodenkontakt bewegt wird.

8. Steuersystem zum Ausfahren eines beweglichen Arms nach Anspruch 7, dadurch gekennzeichnet, daß der bewegliche Teil ein Schwingarm (46) ist, mit einem Ende angelenkt am Arm (3) und am anderen Ende eine Rolle (48) aufweisend.

9. Steuersystem zum Ausfahren eines beweglichen Arms nach einem der Ansprüche 1 bis 8, einen am Fahrzeug befestigten Neigungsdetektor (36) umfassend, dadurch gekennzeichnet, daß es Logikeinrichtungen (37 bis 40) umfaßt, die die durch den Detektor (36) gemessene Neigung und eine Referenzneigung vergleichen und Teilbewegungen des Arms (3) in Richtung seiner eingezogenen Stellung (6) anordnen, wenn die Neigung des Fahrzeugs die Referenzneigung überschreitet.
